(19) Europäisches Patentamt
European Patent Office
Office européen des brevets

(11) EP 2 581 981 B1

# (12) EUROPEAN PATENT SPECIFICATION

(45) Date of publication and mention of the grant of the patent:
**08.04.2020 Bulletin 2020/15**

(21) Application number: **11792398.7**

(22) Date of filing: **06.06.2011**

(51) Int Cl.:
***H01G 9/20*** *(2006.01)* ***H01M 14/00*** *(2006.01)*
***H01L 31/04*** *(2014.01)*

(86) International application number:
**PCT/JP2011/062936**

(87) International publication number:
**WO 2011/155441 (15.12.2011 Gazette 2011/50)**

## (54) WET-TYPE SOLAR CELL AND WET-TYPE SOLAR CELL MODULE

NASSE SOLARZELLE UND MODUL FÜR EINE NASSE SOLARZELLE

CELLULE SOLAIRE DE TYPE HUMIDE ET MODULE DE CELLULES SOLAIRES DE TYPE HUMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2010 JP 2010132247**

(43) Date of publication of application:
**17.04.2013 Bulletin 2013/16**

(73) Proprietor: **Sharp Kabushiki Kaisha**
**Osaka-shi, Osaka 545-8522 (JP)**

(72) Inventors:
- **FUKUI, Atsushi**
**Osaka-shi Osaka 545-8522 (JP)**
- **KOMIYA, Ryoichi**
**Osaka-shi Osaka -shi 545-8522 (JP)**
- **YAMANAKA, Ryohsuke**
**Osaka-shi Osaka 545-8522 (JP)**

(74) Representative: **Müller Hoffmann & Partner Patentanwälte mbB**
**St.-Martin-Strasse 58**
**81541 München (DE)**

(56) References cited:
**JP-A- 2007 194 039**
**JP-A- 2007 287 480**
**JP-A- 2007 317 454**
**JP-A- 2008 016 351**
**JP-A- 2009 043 481**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 581 981 B1

## Description

TECHNICAL FIELD

The present invention relates to a wet-type solar battery and a wet-type solar battery module.

BACKGROUND ART

A solar battery capable of converting sunlight to electric power has attracted attention as a source of energy replacing fossil fuel. Some solar batteries including a crystalline silicon substrate and some thin-film silicon solar batteries have currently been put into practical use. The former, however, is disadvantageous in high cost for manufacturing a silicon substrate, and the latter is disadvantageous in high manufacturing cost because of necessity for use of various semiconductor manufacturing gases or a complicated apparatus. Therefore, though efforts for reducing cost per generated power output have been continued by enhancing efficiency in photoelectric conversion in any solar batteries, the problems above have not yet been solved.

Japanese Patent Laying-Open No. 01-220380 (PTL 1) has proposed as a solar battery of a new type, a wet-type solar battery to which photoinduced electron transfer of a metal complex has been applied. In this wet-type solar battery, a photoelectric conversion layer is sandwiched between electrodes of two glass substrates each having the electrode on a surface thereof. The photoelectric conversion layer is composed of an electrolytic material and a photoelectric conversion material having an absorption spectrum in a visible light region by adsorbing a photosensitizing dye.

As the wet-type solar battery above is irradiated with light, electrons are generated in the photoelectric conversion layer and generated electrons are transferred to the electrode through an external electric circuit. Transferred electrons are carried to the opposing electrode by ions in the electrolyte, and they return to the photoelectric conversion layer. Electric energy is taken out through such a series of flows of electrons.

The dye sensitized solar battery described in PTL 1, however, has such a basic structure that an electrolytic solution is introduced in between opposing glass substrates with transparent conductive film. Therefore, even though it is possible to prototype a solar battery having a small area, it is difficult to apply this structure to a solar battery having an area as large as 1-m square. Namely, as an area of a single solar battery cell is increased, a generated current increases in proportion to the area, however, voltage lowering in a direction of a plane of the transparent conductive film used for an electrode portion increases, which leads to increase in internal series resistance as the solar battery. Consequently, such a problem as lowering in FF (fill factor) in current-voltage characteristics at the time of photoelectric conversion as well as lowering in short-circuiting current and resultant lowering in efficiency in photoelectric conversion occurs.

WO97/16838 (PTL 2) has proposed a dye sensitized solar battery module in which a plurality of dye sensitized solar batteries are arranged as being connected in series on a glass substrate with single transparent conductive film. In this dye sensitized solar battery module, a transparent conductive film of one dye sensitized solar battery and a counter electrode of an adjacent dye sensitized solar battery are brought in contact with each other so that both of these dye sensitized solar batteries are connected in series to each other. In an individual dye sensitized solar battery, a porous semiconductor layer (a porous titanium oxide layer) serving as the photoelectric conversion layer, a porous insulating layer (an intermediate porous insulating layer), and a counter electrode (a catalyst layer) are successively stacked on a transparent substrate (a glass substrate) where a transparent conductive film (an electrode) is patterned in strips.

Japanese Patent Laying-Open No. 2002-367686 (PTL 3) has disclosed a dye sensitized solar battery module having such an integrated structure as having a transparent conductive film, a first photoelectrode composed of a dense material, a second photoelectrode composed of a porous material (a porous semiconductor layer), a separator, and a catalyst (carbon) layer on a transparent substrate. In this dye sensitized solar battery module, by forming the first photoelectrode composed of the dense material directly under the second electrode, contact of a material for the catalyst layer with the transparent conductive film is suppressed. In addition, by providing a photoelectrode layer composed of fine particles smaller in average particle size than fine particles in the material for a catalyst layer, fine particles in the catalyst layer are prevented from passing through the photoelectrode layer to reach the conductive layer, and thus internal short-circuiting is prevented.

In the dye-sensitized solar battery described in document JP 2009 043481 A, the transparent electrode formed on a translucent substrate as a light-receiving surface and its paired electrode are oppositely disposed with an electrolyte layer therebetween and a dye-adsorbed porous semiconductor film is formed at least partially on a non-light-receiving surface of the transparent electrode. The porous semiconductor film has a through-hole extending from the non-light-receiving surface side to the transparent electrode and the transparent electrode in the through-hole and the transparent electrode in an area with no porous semiconductor film are electrically connected together via a conductive layer formed on the non-light-receiving surface of the porous semiconductor film.

In document JP 2008 016351 A, a dye-sensitized solar battery module is provided with substrates, electrodes,

a photoelectric transducer formed on each electrode, an inter-cell insulating layer formed between the mutual photoelectric transducers, electrodes each formed from above the one photoelectric transducer over to the electrode under another neighboring photoelectric transducer beyond the inter-cell insulating layer, an inter-cell sealing layer formed between the substrate directly or via the electrode on the inter-cell insulating layer, and a sealing layer formed on the outer periphery between the substrates, in which the photoelectric transducer has a photoelectric conversion layer composed of a die-adsorbed porous semiconductor layer, a porous insulating layer containing an electrolyte, and a catalyst layer, in which the photoelectric transducer is contacted with the inter-cell insulating layer, in which the inter-cell insulating layer is composed of a film not permeating the electrolyte and arranged between the neighboring electrodes, and in which the inter-cell sealing layer is arranged at a position overlapped with the inter-cell insulating layer.

CITATION LIST

PATENT LITERATURE

PTL 1: Japanese Patent Laying-Open No. 01-220380
PTL 2: WO97/16838
PTL 3: Japanese Patent Laying-Open No. 2002-367686

SUMMARY OF INVENTION

TECHNICAL PROBLEM

The dye sensitized solar battery in PTL 3 has a conductive layer having the first photoelectrode and the second photoelectrode (the porous semiconductor layer) formed. A conductive layer portion in contact with the carbon layer is isolated by laser scribing or the like. Each of the first electrode and the second electrode is formed to correspond to an end of an insulating portion of the conductive layer. When a photoelectrode is formed with screen printing, a portion small in film thickness (slump) is produced around a printed member such as a photoelectrode due to a property of printing. If such slump overlaps with an insulating portion of the conductive layer, which is a recess portion of the submicron order, the printed member such as a photoelectrode peels off, which leads to occurrence of failure and lowering in yield.

When a position where a photoelectrode is to be formed is spaced apart from the insulating portion in order to suppress peel-off, in that portion, only a porous insulating layer is present between the counter electrode conductive layer and the conductive layer. As a result of studies conducted by the inventors, it has been found that an incidence of internal short-circuiting due to contact of a material for a counter electrode conductive layer with a conductive layer is greatly dependent on a film thickness of a layer interposed between the counter electrode conductive layer and the conductive layer. Therefore, it has been found that internal short-circuiting frequently occurs on the conductive layer where only the porous insulating layer is present, which causes significant lowering in yield.

In addition, as disclosed in PTL 3, as the first photoelectrode which is a dense layer is formed, internal short-circuiting decreases, whereas an amount of adsorption of a dye in a portion highest in light intensity lowers and a generated current lowers.

Moreover, the present inventors have conducted studies about an incidence of internal short-circuiting between the counter electrode conductive layer and the conductive layer and have revealed that an incidence of internal short-circuiting is dependent on a film thickness and an area of a layer present between the counter electrode conductive layer and the conductive layer. Namely, it has been revealed that internal short-circuiting frequently occurs in the case where only a porous insulating layer is present between the counter electrode conductive layer and the conductive layer, which causes significant lowering in yield.

Thus, when an outer periphery not located on a scribe line side of outer peripheries of the counter electrode conductive layer projected on a light receiving surface is greater than an outer periphery of the photoelectric conversion layer projected similarly on the light receiving surface, the counter electrode conductive layer extending off the photoelectric conversion layer includes only a porous insulating layer between the counter electrode conductive layer itself and the conductive layer. Therefore, when the porous insulating layer has a small thickness, internal short-circuiting frequently occurs on the conductive layer in this portion and yield greatly lowers.

Alternatively, when the outer periphery of the photoelectric conversion layer projected on the light receiving surface is greater than the outer periphery of the counter electrode conductive layer projected on the light receiving surface, a portion where a counter electrode is absent is present on a power generating portion of the electrode, and hence performance significantly lowers.

SOLUTION TO PROBLEM

The present invention was made in view of the problems above, and an object thereof is to provide a wet-type solar battery capable of achieving suppressed occurrence of failure due to internal short-circuiting and improving yield and to provide a wet-type solar battery module including the wet-type solar battery.

The problem is solved by the teachings of the independent claim. Further embodiment is defined in the dependent claim. The invention is defined by the appended claims. References to embodiments which do not fall under the scope of the claims are to be understood as examples useful for understanding the invention.

A wet-type solar battery according to the present disclosure includes a support composed of a light transmissive material and a stack in which a conductive layer, a photoelectric conversion layer composed of a porous semiconductor, a porous insulating layer, and a counter electrode conductive layer are stacked in this order on the support, the conductive layer has a first region on which the photoelectric conversion layer is stacked and a second region on which the photoelectric conversion layer is not stacked, with a scribe line lying therebetween, and the photoelectric conversion layer is stacked on a part of a surface of the first region and a distance D from a peripheral portion of the first region facing the scribe line to a peripheral portion of the photoelectric conversion layer is not smaller than 50 μm. Preferably, distance D is not greater than 500 μm.

Preferably, a film thickness Y of the porous insulating layer satisfies

$$Y \geq 0.02D + 6.5 \qquad \text{... (1)}$$

(where Y represents a film thickness (μm) of the porous insulating layer and D represents distance D (μm)).

Preferably, distance D exceeds 500 μm and film thickness Y of the porous insulating layer satisfies

$$Y \geq 16.5 \qquad \text{... (2)}$$

(where Y represents a film thickness (μm) of the porous insulating layer and D represents distance D (μm)).

A wet-type solar battery according to the present disclosure includes a support composed of a light transmissive material, and a stack in which a conductive layer, a photoelectric conversion layer composed of a porous semiconductor, a porous insulating layer, and a counter electrode conductive layer are stacked in this order on the support, the conductive layer has a first region on which the photoelectric conversion layer is stacked and a second region on which the photoelectric conversion layer is not stacked, with a scribe line lying therebetween, and the photoelectric conversion layer is stacked on a part of a surface of the first region and a distance A from an outer periphery of the counter electrode conductive layer projected on a light receiving surface on a side not facing the scribe line to an outer periphery of the photoelectric conversion layer is not greater than 500 μm. When the outer periphery of the photoelectric conversion layer is located inside the outer periphery of the counter electrode conductive layer, preferably, distance A and a film thickness Y of the porous insulating layer satisfy

$$Y \geq 0.02A + 6.5 \qquad \text{... (3)}$$

(where Y represents a film thickness (μm) of the porous insulating layer and A represents distance A (μm)).

A wet-type solar battery according to the present disclosure includes a support composed of a light transmissive material, and a stack in which a conductive layer, a photoelectric conversion layer composed of a porous semiconductor, a porous insulating layer, and a counter electrode conductive layer are stacked in this order on the support, the conductive layer has a first region on which the photoelectric conversion layer is stacked and a second region on which the photoelectric conversion layer is not stacked, with a scribe line lying therebetween, the photoelectric conversion layer is stacked on a part of a surface of the first region and a distance A from an outer periphery of the counter electrode conductive layer projected on a light receiving surface on a side not facing the scribe line to an outer periphery of the photoelectric conversion layer exceeds 500 μm, and the porous insulating layer has a film thickness not smaller than 16.5 μm.

According to the present disclosure, there is provided a wet-type solar battery module in which two or more wet-type solar batteries are connected in series, the module including at least one wet-type solar battery according to any embodiment above, and connection in series being formed such that a counter electrode conductive layer of one wet-type solar battery of adjacent wet-type solar batteries is electrically connected to a conductive layer of the other wet-type solar battery.

ADVANTAGEOUS EFFECTS OF INVENTION

According to the present invention, a wet-type solar battery capable of achieving suppressed occurrence of failure due to internal short-circuiting and improving yield can be provided, with distance A defined above in a wet-type solar battery being not greater than 500 μm or with distance D defined above being not smaller than 50 μm. In addition, a wet-type solar battery module including the wet-type solar battery can be provided.

BRIEF DESCRIPTION OF DRAWINGS

Fig. 1 is (a) a schematic cross-sectional view showing a layered structure of a wet-type solar battery according to the present invention and (b) a top view when the wet-type solar battery in (a) is viewed from a non-light receiving surface side.
Fig. 2 is a schematic cross-sectional view showing a layered structure of a wet-type solar battery module according to the present invention.
Fig. 3 is a graph showing relation between a distance D and a film thickness Y of a porous insulating layer.
Fig. 4 is a graph showing relation between a distance A and film thickness Y of the porous insulating layer.

DESCRIPTION OF EMBODIMENTS

A suitable embodiment of the present invention will be described with reference to the drawings. It is noted that this embodiment is by way of example and embodiments in various forms are possible within the scope of the present invention. An element having the same reference character allotted in the drawings of the present application shows the same or corresponding element.

<Wet-Type Solar Battery>

Fig. 1 (a) is a schematic cross-sectional view showing a layered structure of a wet-type solar battery (hereinafter also referred to as a "solar battery" or a "dye sensitized solar battery") according to the present invention, and Fig. 1 (b) is a diagram when the wet-type solar battery in Fig. 1 (a) is viewed from a non-light receiving surface side.

As shown in Fig. 1 (a), a wet-type solar battery 10 according to the present invention includes a support 1 and a stack formed on support 1. This stack is such that a conductive layer 2, a photoelectric conversion layer 4, a porous insulating layer 5, and a counter electrode conductive layer 6 are stacked in this order. A cover layer 7 is provided above counter electrode conductive layer 6 and a sealing material 8 is provided on each of opposing sides of the stack.

In the wet-type solar battery according to the present invention, conductive layer 2 is divided by a scribe line 3 into a first region 2a on which photoelectric conversion layer 4 is stacked and a second region 2b on which photoelectric conversion layer 4 is not stacked. Photoelectric conversion layer 4 is stacked on a part of a surface of first region 2a of conductive layer 2. Namely, first region 2a includes a portion on which photoelectric conversion layer 4 is stacked and a portion on which photoelectric conversion layer 4 is not stacked. The present invention is characterized in that a distance D from a peripheral portion of first region 2a facing scribe line 3 to a peripheral portion of photoelectric conversion layer 4 is not smaller than 50 μm.

Distance D refers to a distance between an average line of a boundary of photoelectric conversion layer 4 facing a scribe line 3 side and an average line of a boundary of scribe line 3 facing a photoelectric conversion layer 4 side of first region 2a.

When distance D is smaller than 50 μm, slump caused during printing, running around of ink due to lowering in printing accuracy and printing performance, or the like occurs. Thus, a part of a porous semiconductor forming the photoelectric conversion layer overlaps with the scribe line and peel-off during a process of drying, firing, or the like occurs, which causes failure or lowering in yield.

Distance D is preferably not greater than 500 μm. When distance D is not greater than 500 μm, short-circuiting between conductive layer 2 and counter electrode conductive layer 6 can be suppressed. In this case, relation in Equation (1) below is preferably satisfied.

$$Y \geq 0.02D + 6.5 \qquad \dots (1)$$

(where Y represents a film thickness (μm) of the porous insulating layer and D represents distance D (μm), $50 \leq D \leq 500$).

According to the studies conducted by the inventors, a portion where a catalyst layer and a conductive layer present on a light receiving surface side are short-circuited to each other and physical leakage occurs is located between the scribe line and the photoelectric conversion layer, and a large area of this portion leads to higher probability of leakage. Therefore, a film thickness of a porous insulating layer should be increased with increase in area of this portion, and a relational expression thereof is expressed with (1).

On the other hand, it has been found that, when D exceeds 500 μm, a probability of leakage becomes constant, and leakage does not occur by ensuring film thickness Y of the porous insulating layer satisfying Equation (2) below.

$$Y \geq 16.5 \qquad ... (2)$$

(where Y represents a film thickness (μm) of the porous insulating layer and D represents distance D (μm)).

It is noted that film thickness Y of the porous insulating layer refers to a vertical distance from a surface of conductive layer 2 to an outermost surface of porous insulating layer 5 and to a thickness of a layer in a portion of first region 2a on which the photoelectric conversion layer is not stacked.

In addition, as shown in Fig. 1 (b), the present invention is characterized in that distance A from the outer periphery of the counter electrode conductive layer projected on the light receiving surface on the side not facing scribe line 3 to the outer periphery of the photoelectric conversion layer is not greater than 500 μm.

Specifically, distance A refers to a distance from an average line of the outer periphery of photoelectric conversion layer 4 on the side not facing the scribe line 3 side to an average line of the outer periphery of photoelectric conversion layer 4.

Distance A refers to a distance from the outer periphery of the counter electrode conductive layer projected on the light receiving surface on the side not facing the scribe line side to the outer periphery of the photoelectric conversion layer not facing the scribe line side and it is characterized by being not greater than 500 μm. Distance A is preferably not greater than 100 μm. When the distance exceeds 500 μm, an area of a portion where a counter electrode conductive layer (a positive electrode) is not located on the photoelectric conversion layer (a negative electrode) increases and a distance of travel of an electrolytic solution becomes long, which is not preferred. Since a distance of travel of an electrolytic solution composition owing to the Brownian movement is several hundred μm, performance significantly lowers due to voltage drop caused by movement of the electrolytic solution composition in the case where distance A exceeds 500 μm.

When the outer periphery of the photoelectric conversion layer is located inside the outer periphery of the counter electrode conductive layer and when distance A is not greater than 500 μm, leakage between the counter electrode conductive layer and the conductive layer can be suppressed by satisfying relation in Equation (3) below.

$$Y \geq 0.02A + 6.5 \qquad ... (3)$$

(where Y represents a film thickness (μm) of the porous insulating layer and A represents distance A (μm)).

According to the studies conducted by the inventors, the catalyst layer and the conductive layer present on the light receiving surface side are short-circuited and physical leakage occurs in a portion of the counter electrode conductive layer extending off the photoelectric conversion layer. A large area of this portion extending off leads to a higher probability of leakage. Therefore, a film thickness of the porous insulating layer should be increased with increase in area of this portion, and a relational expression thereof is expressed in (3).

On the other hand, it has been found that, when A exceeds 500 μm, a probability of leakage becomes constant, and leakage does not occur by ensuring a film thickness of the porous insulating layer not smaller than 16.5 μm. Namely, the present invention is characterized in that a porous insulating layer has a film thickness not smaller than 16.5 μm in the case where distance A exceeds 500 μm.

It is noted that film thickness Y of the porous insulating layer refers to a vertical distance from the surface of conductive layer 2 to the outermost surface of porous insulating layer 5 and to a thickness of a porous insulating layer in a portion of first region 2a on which photoelectric conversion layer 4 is not stacked. Each feature of the wet-type solar battery according to the present invention will be described hereinafter in detail.

<Support>

Since support 1 should have a light transmissive property in its portion serving as a light receiving surface of a solar battery, preferably, it is composed of a material at least having a light transmissive property and it has a thickness approximately from 0.2 to 5 mm.

A material forming support 1 is not particularly limited so long as the material can generally be used for a solar battery and can exhibit an effect of the present invention. Examples of such a material include, for example, a glass substrate of soda glass, fused silica glass, crystal silica glass, and the like, a heat resistant resin plate such as a flexible film, and the like.
Examples of a material forming the flexible film (hereinafter also referred to as a "film") include tetraacetyl cellulose (TAC), polyethylene terephthalate (PET), polyphenylene sulfide (PPS), polycarbonate (PC), polyarylate (PA), polyetherimide (PEI), phenoxy resin, polytetrafluoroethylene (PTFE), and the like.
In a case where other layers are formed on support 1 through heating, for example, in a case of forming conductive layer 2 on support 1 through heating to approximately 250°C, among the materials forming the flexible film, polytetrafluoroethylene (PTFE) having resistance to heat not lower than 250°C is particularly preferred.
In addition, support 1 can be made use of when a completed solar battery is attached to another structure. Namely, a peripheral portion of support 1 such as a glass substrate can readily be attached to another support 1 by using a metalworked part and a screw.

<Conductive Layer>

Conductive layer 2 serves as a light receiving surface of a solar battery and should have a light transmissive property, and hence it is composed of a light transmissive material. It is noted that any material substantially allowing passage of light of a wavelength at least effectively sensitive to a sensitizing dye which will be described later should only be employed and the conductive layer does not necessarily have to have a property to transmit light in all wavelength regions.
A light transmissive material forming conductive layer 2 is not particularly limited so long as the material can generally be used for a solar battery and can exhibit an effect of the present invention. Examples of such a material include indium-tin composite oxide (ITO), fluorine-doped tin oxide (FTO), zinc oxide (ZnO), and the like.
A structure in which conductive layer 2 is stacked on support 1 may herein be referred to as a transparent electrode substrate 11. Specifically, an example of such a transparent electrode substrate 11 is a transparent electrode substrate in which conductive layer 2 composed of FTO is stacked on support 1 composed of soda lime float glass, which is suitably employed in the present invention.
Conductive layer 2 has a film thickness preferably approximately from 0.02 to 5 $\mu$m and a film resistance desirably as low as possible, preferably not higher than 40 $\Omega$/sq.
For achieving lower resistance, conductive layer 2 may be provided with a metal lead. Examples of a material for the metal lead include platinum, gold, silver, copper, aluminum, nickel, titanium, and the like. It is noted that, in the case where lowering in an amount of incident light on a light receiving surface is caused by provision of a metal lead, the metal lead preferably has a thickness approximately from 0.1 to 4 mm.

<Scribe Line>

Scribe line 3 is formed by cutting a conductive film forming a conductive layer with laser scribing. Scribe line 3 divides conductive layer 2 into first region 2a including a portion on which photoelectric conversion layer 4 which will be described later is stacked and a portion on which photoelectric conversion layer 4 is not stacked and second region 2b where photoelectric conversion layer 4 is not formed. Although depending on a size or the like of a wet-type solar battery, a distance between first region 2a and second region 2b, between which scribe line 3 lies (a width of the scribe line), is, for example, approximately from 10 $\mu$m to 200 $\mu$m.

<Photoelectric Conversion Layer>

Photoelectric conversion layer 4 is obtained by adsorbing a dye or a quantum dot to a layer composed of a porous semiconductor and filling the layer with a carrier transport material.

<Porous Semiconductor>

The porous semiconductor is composed of a semiconductor. Various forms such as a bulk form, a particulate form, and a film form having numerous small pores can be employed, however, a film form having numerous small pores is preferred.
A semiconductor material forming a porous semiconductor is not particularly limited so long as the material is generally used as a material for photoelectric conversion. Examples of such a material include a compound such as titanium oxide, zinc oxide, tin oxide, iron oxide, niobium oxide, cerium oxide, tungsten oxide, nickel oxide, strontium titanate, cadmium sulfide, lead sulfide, zinc sulfide, indium phosphide, copper-indium sulfide ($CuInS_2$), $CuAlO_2$, and

$SrCu_2O_2$, and combination thereof. Among these, titanium oxide, zinc oxide, tin oxide, and niobium oxide are preferred, and titanium oxide is particularly preferred from a point of view of photoelectric conversion efficiency, stability, and safety. In addition, these semiconductor materials can also be employed as a mixture of two or more types.

In the present invention, titanium oxide encompasses various narrowly-defined titanium oxides such as anatase-type titanium oxide, rutile-type titanium oxide, amorphous titanium oxide, metatitanic acid, and orthotitanic acid, titanium hydroxide, hydrous titanium oxide, and the like, and they can be used alone or as a mixture. Two crystal system types of anatase type and rutile type can be in any form depending on a manufacturing method thereof or thermal hysteresis, however, the anatase type is general.

From a point of view of obtaining an effective surface area sufficiently great with respect to a projection area, fine particles have an average particle size preferably not smaller than 5 nm and smaller than 50 nm (preferably not smaller than 10 nm and not greater than 30 nm). By using such fine particles, incident light can be converted to electric energy at high yield.

It is noted that the average particle size herein refers to a value determined based on a diffraction peak in XRD (X-ray diffraction). Specifically, an average particles size is calculated from a half width of a diffraction angle in $\theta/2\theta$ measurement in XRD and from Scherrer's Equation. For example, in a case of anatase-type titanium oxide, a half width of a diffraction peak corresponding to a (101) plane ($2\theta$ = around 25.3°) should only be measured.

A light scattering property of the photoelectric conversion layer composed of a porous semiconductor can be adjusted by a particle size (an average particle size) of a semiconductor material used for forming the layer.

Although depending on a condition for forming the photoelectric conversion layer composed of a porous semiconductor, specifically in a case of including a porous semiconductor formed from semiconductor particles great in average particles size, a light scattering property is high, incident light can be scattered, and thus a light capturing rate can be improved. Alternatively, a porous semiconductor layer formed from semiconductor particles small in average particle size has a low light scattering property and the increased number of dye adsorption points so that an amount of adsorption can be increased.

Therefore, in the present invention, a layer formed of semiconductor particles having an average particles size preferably not smaller than 50 nm and more preferably not smaller than 50 nm and not greater than 600 nm may be provided on a polycrystalline sintered body formed of fine particles. Thus, a porous semiconductor forming the photoelectric conversion layer in the present invention may have a stack structure.

An average particle size of a porous semiconductor material is not particularly limited so long as it is within the range preferably capable of exhibiting an effect of the present invention. An average particle size uniform to some extent is further preferred as in the case of commercially available semiconductor material powders, from a point of view of effective use of incident light for photoelectric conversion.

An insulating layer is generally provided between the photoelectric conversion layer composed of a porous semiconductor and the counter electrode. As disclosed in Japanese Patent Laying-Open No. 2007-194039, however, a single layer of a counter electrode conductive layer or a conductive layer may be formed on a photoelectric conversion layer containing a porous semiconductor formed of fine particles having a large particle size (approximately from 100 nm to 500 nm in the present invention). A photoelectric conversion layer containing a porous semiconductor having a high light scattering property, in particular a photoelectric conversion layer in contact with counter electrode conductive layer 6, may be low in mechanical strength, because a semiconductor material forming the photoelectric conversion layer has a large average particle size. Then, a problem as a structure of a solar battery may arise. In such a case, the photoelectric conversion layer may mechanically be strengthened by blending a semiconductor material small in average particle size in a semiconductor material large in average particle size, for example, at a ratio of 10 weight % or lower.

Though a film thickness of the photoelectric conversion layer (porous semiconductor layer) is not particularly limited, from a point of view of photoelectric conversion efficiency, the film thickness is preferably approximately from 0.5 to 50 $\mu$m. In particular, in a case of providing a layer having a high light scattering property and formed of semiconductor particles having an average particle size not smaller than 50 nm, the layer has a film thickness preferably from 0.1 to 40 $\mu$m and more preferably from 5 to 20 $\mu$m. In a case of providing a layer formed of semiconductor particles having an average particle size not smaller than 5 nm and smaller than 50 nm, the layer has a film thickness preferably from 0.1 to 50 $\mu$m and more preferably from 10 to 40 $\mu$m.

In order to improve photoelectric conversion efficiency of a wet-type solar battery, it is necessary to form the photoelectric conversion layer with a dye which will be described later being adsorbed to a porous semiconductor in a greater amount. Therefore, a film-shaped porous semiconductor having a large specific surface area is preferred, the specific surface area being preferably approximately from 10 to 200 $m^2/g$.

<Photosensitizer>

Examples of a dye functioning as a photosensitizer, to be adsorbed to a porous semiconductor, include organic dyes having absorbability in various visible light regions and/or infrared regions, metal complex dyes, and the like, and

one, or two or more types, of these dyes can selectively be employed.

Examples of an organic dye include an azo-based dye, a quinone-based dye, a quinone-imine-based dye, a quinacridone-based dye, a squarylium-based dye, a cyanine-based dye, a merocyanine-based dye, a triphenylmethane-based dye, a xanthene-based dye, a porphyrin-based dye, a perylene-based dye, an indigo-based dye, a phthalocyanine-based dye, a naphthalocyanine-based dye, and the like.

An organic dye is generally higher in extinction coefficient than a metal complex dye in such a form that a molecule is coordinated to a transition metal.

Examples of a metal complex dye include a dye in which a molecule is coordinated to such a metal as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te, and Rh, and the like. Among these, a phthalocyanine-based metal complex dye and a ruthenium-based dye are preferred, and a ruthenium-based metal complex dye is particularly preferred.

In particular, ruthenium-based metal complex dyes expressed in the following chemical formulae (4) to (6) are preferred.

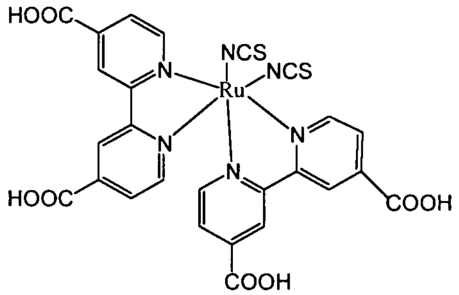

... (4)

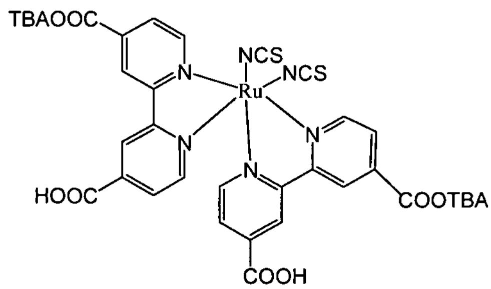

... (5)

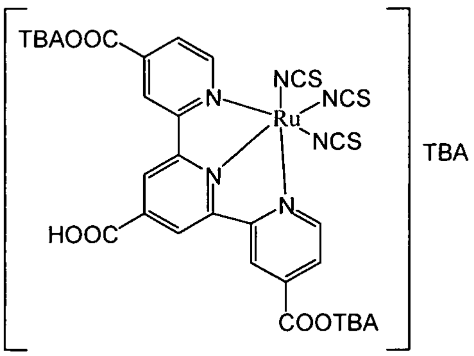

... (6)

In order to securely adsorb a dye to a porous semiconductor, a dye molecule preferably has an interlocking group such as a carboxylic acid group, a carboxylic acid anhydride group, an alkoxy group, a hydroxyl group, a hydroxyalkyl group, a sulfonic acid group, an ester group, a mercapto group, and a phosphonyl group. Among these, a carboxylic acid group and a carboxylic acid anhydride group are particularly preferred. It is noted that an interlocking group provides electrical coupling facilitating electron transfer between a dye in an excited state and a conduction band of a porous semiconductor.

Examples of a quantum dot adsorbing to a porous semiconductor and functioning as a photosensitizer include CdS, CdSe, PbS, PbSe, and the like.

<Porous Insulating Layer>

In a wet-type solar battery, porous insulating layer 5 is generally provided between photoelectric conversion layer 4 and counter electrode conductive layer 6. As a material for porous insulating layer 5, a material high in level of a conduction band, such as glass, zirconium oxide, silicon oxide, aluminum oxide, niobium oxide, and strontium titanate is employed. In addition, a porous insulating layer formed of a particulate porous material is exemplified as porous insulating layer 5, and in this case, the particulate porous material has an average particle size preferably from 5 to 500 nm and more preferably from 10 to 300 nm.

<Counter Electrode Conductive Layer>

Counter electrode conductive layer 6 in the present invention refers to combination of a catalyst layer having catalytic capability and a function to reduce holes in a carrier transport layer and a conductive layer having a function to collect electrons and establish connection in series with an adjacent solar battery. In addition, in a case where a layer has these functions together, that is, in a case where a catalyst layer has high conductivity or in a case where a conductive layer has catalytic capability, such a layer alone can serve as counter electrode conductive layer 6. Moreover, an embodiment in which a catalyst layer is further provided separately from the counter electrode conductive layer is also encompassed in the present invention.

In a case of forming a catalyst layer and a conductive layer, normally, a catalyst layer is formed on porous insulating layer 5 and a conductive layer is formed thereafter, to thereby form counter electrode conductive layer 6.

In a case where film strength of a catalyst layer is low as in the case of a catalyst layer composed of platinum or the like and formed with a vapor deposition method or the like, the counter electrode conductive layer formed on the catalyst layer may peel off from the catalyst layer. Then, an order of stack may be reverse to that of a normal wet-type solar battery, for example, by precedently providing a conductive layer on porous insulating layer 5 and then forming the catalyst layer on the conductive layer. According to this stacking order, peel-off of the counter electrode conductive layer from the catalyst layer can be prevented.

<Material for Forming Conductive Layer>

A material forming a conductive layer of counter electrode conductive layer 6 is not particularly limited so long as the material can generally be used for a solar battery and can exhibit an effect of the present invention. Examples of such a material include a metal oxide such as indium-tin composite oxide (ITO), fluorine-doped tin oxide (FTO), and zinc oxide (ZnO), and a metal material such as titanium, tungsten, gold, silver, copper, and nickel. Taking into account film strength, titanium is most preferred.

In forming counter electrode conductive layer 6 with a vapor deposition method, the film itself becomes porous and therefore it is not necessary to newly form pores through which a dye solution or a carrier transport material can transfer. In a case of forming counter electrode conductive layer 6 with a vapor deposition method, a pore has a diameter approximately from 1 nm to 20 nm. It has been confirmed, however, that, even though catalyst layer 7 is formed on the counter electrode conductive layer, a material for the catalyst layer does not pass through pores in counter electrode conductive layer 6 to reach porous insulating layer 5 and further to a porous semiconductor layer (photoelectric conversion layer 7).

In a case where catalyst layer 7 is formed by applying a paste in which fine particles of platinum or carbon have been dispersed, counter electrode conductive layer 6 should be dense in order to suppress penetration of fine particles. In this case, pores in counter electrode conductive layer 6 should only be formed after catalyst layer 7 is stacked, simultaneously with formation thereof in catalyst layer 7. In this case, a preferred material for the counter electrode conductive layer is not particularly limited so long as the material is capable of forming a dense film, such as a metal oxide including indium-tin composite oxide (ITO), fluorine-doped tin oxide (FTO), and zinc oxide (ZnO), a metal material including titanium, tungsten, gold, silver, copper, and nickel, and the like.

A film thickness of counter electrode conductive layer 6 should only be selected as appropriate depending on resistivity of a material, with attention being paid to the fact that too small a thickness leads to high resistance and too great a thickness prevents transfer of a carrier transport material.

Pores can be formed by partial evaporation, for example, with irradiation with laser beams.

Preferably, the pore has a diameter from 0.1 μm to 100 μm and the pores are formed at an interval from 1 μm to 200 μm. More preferably, the pore has a diameter from 1 μm to 100 μm and the pores are formed at an interval from 5 μm to 200 μm.

<Material for Catalyst Layer>

A material forming a catalyst layer is not particularly limited so long as the material can generally be used for a solar battery and can exhibit an effect of the present invention. For example, platinum or carbon is preferred as such a material. Preferred forms of carbon include carbon black, graphite, glass carbon, amorphous carbon, hard carbon, soft carbon, carbon whisker, carbon nanotube, fullerene, and the like.

<Cover Layer>

Cover layer 7 is important in order to prevent volatilization of an electrolytic solution and introduction of water or the like into the battery.

A material forming cover layer 7 is not particularly limited so long as the material can generally be used for a solar battery and can exhibit an effect of the present invention. Examples of such a material include soda lime glass, lead glass, borosilicate glass, fused silica glass, crystalline silica glass, and the like. A particularly preferred material is soda lime float glass.

<Sealing Material>

Sealing material 8 is important in order to prevent volatilization of an electrolytic solution and introduction of water or the like into the battery.

In addition, sealing material 8 is important for fulfilling such purposes as (i) absorbing a drop or stress (impact) applied to a support and (ii) absorbing bending or the like applied to a support during long-time use.

A material forming sealing material 8 is not particularly limited so long as the material can generally be used for a solar battery and can exhibit an effect of the present invention. For such a material, for example, a silicone resin, an epoxy resin, a polyisobutylene-based resin, such a hot melt resin as a polyamide-based resin, a polyolefin-based resin, and an ionomer resin, glass frit, and the like are preferred, and these materials can also be used as a mixture of two or more types, or two or more types of them can also be used as a stack structure including two or more layers. In a case where a nitrile-based solvent or a carbonate-based solvent is employed as a solvent for an oxidation-reduction electrolyte, a silicone resin, a hot melt resin, a polyisobutylene-based resin, and glass frit are particularly preferred.

<Carrier Transport Layer>

The "carrier transport layer" in the present invention refers to a region sandwiched between cover layer 7 and conductive layer 2 on an inner side of sealing material 8, in which a carrier transport material has been introduced, and supported by sealing material 8. Therefore, at least photoelectric conversion layer 4 and porous insulating layer 5 are filled with a carrier transport material.

The carrier transport material is formed of a conductive material capable of transporting ions, and examples of a suitable material include a liquid electrolyte, a solid electrolyte, a gel electrolyte, a fused salt gel electrolyte, and the like.

A liquid electrolyte should only be a liquid substance containing redox species, and it is not particularly limited so long as it can generally be used in a battery, a solar battery, or the like. Specifically, a liquid electrolyte formed of redox specifies and a solvent capable of dissolving the same, a liquid electrolyte formed of redox species and fused salt capable of dissolving the same, and a liquid electrolyte formed of redox species, a solvent capable of dissolving the same, and fused salt are exemplified.

Examples of redox species include an $I^-/I^{3-}$ type, a $Br^{2-}/Br^{3-}$ type, an $Fe^{z+}/Fe^{3+}$ type, a quinone/hydroquinone type, and the like.

Specifically, combination of iodine ($I_2$) and a metal iodide such as lithium iodide (LiI), sodium iodide (NaI), potassium iodide (KI), and calcium iodide ($CaI_2$), combination of iodine and tetraalkyl ammonium salt such as tetraethyl ammonium iodide (TEAI), tetrapropyl ammonium iodide (TPAI), tetrabutyl ammonium iodide (TBAI), and tetrahexyl ammonium iodide (THAI), and combination of bromine and a metal bromide such as lithium bromide (LiBr), sodium bromide (NaBr), potassium bromide (KBr), and calcium bromide ($CaBr_2$) are preferred, and among these, combination of LiI and $I_2$ is particularly preferred.

In addition, examples of a solvent for redox species include a carbonate compound such as propylene carbonate, a nitrile compound such as acetonitrile, alcohols such as ethanol, water, an aprotic polar substance, and the like. Among these, a carbonate compound or a nitrile compound is particularly preferred. These solvents can also be employed as a mixture of two or more types.

A solid electrolyte is a conductive material capable of transporting electrons, holes, and ions, and it may be a material which can be employed as an electrolyte for a solar battery and has no fluidity. Specifically, a hole transport material such as polycarbazole, an electron transport material such as tetranitro fluorenone, a conductive polymer such

as polyrrole, a polymeric electrolyte obtained by solidifying a liquid electrolyte with a polymeric compound, a p-type semiconductor such as copper iodide or copper thiocyanate, an electrolyte obtained by solidifying a liquid electrolyte containing fused salt with fine particles, and the like are exemplified.

A gel electrolyte is normally composed of an electrolyte and a gelling agent.

Examples of a gelling agent include a cross-linked polyacrylic resin derivative and a cross-linked polyacrylonitrile derivative, a polyalkylene oxide derivative, silicone resins, a polymeric gelling agent such as a polymer having a nitrogen-containing heterocyclic quaternary compound salt structure in a side chain, and the like.

A fused salt gel electrolyte is normally composed of the gel electrolyte as above and ambient-temperature fused salt.

Examples of ambient-temperature fused salt include nitrogen-containing heterocyclic quaternary ammonium salt compounds such as pyridinium salts and imidazolium salts, and the like.

An additive may be added as necessary to the electrolyte above.

Examples of such an additive include a nitrogen-containing aromatic compound such as t-butyl pyridine (TBP), and imidazole salt such as dimethylpropyl imidazole iodide (DMPII), methylpropyl imidazole iodide (MPII), ethylmethyl imidazole iodide (EMII), ethyl imidazole iodide (EII), and hexylmethyl imidazole iodide (HMII).

Electrolyte concentration in the electrolyte is preferably in a range from 0.001 to 1.5 mol/liter and particularly preferably in a range from 0.01 to 0.7 mol/liter. If a catalyst layer is located on the light receiving surface side in the module according to the present invention, incident light passes through an electrolytic solution to reach a porous semiconductor layer to which a dye has been adsorbed and thus carriers are excited. Thus, performance may lower depending on electrolyte concentration adopted in a unit cell having a catalyst layer on the light receiving surface side, and therefore electrolyte concentration is preferably set in consideration of this fact.

<Extraction Electrode>

Counter electrode conductive layer 6 is provided with an extraction electrode (not shown) as necessary. By using the extraction electrode, a current is taken out of the solar battery to the outside.

A material for forming an extraction electrode is not particularly limited so long as the material can generally be used for a solar battery and can exhibit an effect of the present invention.

<Method of Manufacturing Wet-Type Solar Battery>

A method of manufacturing a wet-type solar battery shown in Fig. 1 (a) will be described.

The method of manufacturing a wet-type solar battery according to the present invention has the steps of forming a stack in which conductive layer 2, photoelectric conversion layer 4 with a dye being adsorbed to a porous semiconductor, porous insulating layer 5, and counter electrode conductive layer 6 are stacked in this order, on one surface of support 1 composed of a light transmissive material, forming sealing material 8 around an outer periphery of the stack, arranging cover layer 7 supported by sealing material 8 in a facing manner, and introducing a carrier transport material into a carrier transport layer sandwiched between conductive layer 2 located on the inner side of sealing material 8 and cover layer 7 and supported by sealing material 8.

A method of forming conductive layer 2 on support 1 to fabricate transparent electrode substrate 11 is not particularly limited, and for example, a sputtering method, a spraying method, and the like which have been known are exemplified.

In a case where conductive layer 2 is provided with a metal lead (not shown), for example, a metal lead may be formed on support 1 with a sputtering method, a vapor deposition method, and the like which have been known and then conductive layer 2 may be formed on support 1 including the metal lead, or conductive layer 2 may be formed on support 1 and then a metal lead may be formed on conductive layer 2.

Scribe line 3 is formed by cutting conductive layer 2 with laser scribing.

As a method of forming a layer composed of a film-shaped porous semiconductor on conductive layer 2 of transparent electrode substrate 11, a method of applying a paste containing semiconductor particles onto a conductive layer with a screen printing method, an ink jet method, and the like, and thereafter firing the conductive layer, a sol-gel method, a method making use of electrochemical oxidation-reduction reaction, and the like are exemplified. Among these methods, a screen printing method using a paste is particularly preferred because a layer composed of a thick porous semiconductor can be formed with low cost.

Though a layer composed of a porous semiconductor is formed in the vicinity of scribe line 3 in the present invention, distance D is preferably not smaller than 50 $\mu$m. Relation with distance D from the peripheral portion of the conductive layer facing the scribe line to the peripheral portion of the photoelectric conversion layer is as described above.

A method of forming a layer composed of a porous semiconductor with the use of titanium oxide serving as semiconductor particles will specifically be described.

Initially, 125 mL of titanium isopropoxide (manufactured by Kishida Chemical Co., Ltd.) is dropped into 750 mL of 0.1 M nitric acid aqueous solution (manufactured by Kishida Chemical Co., Ltd.) to cause hydrolysis. The aqueous solution is heated at 80°C for 8 hours to prepare a sol liquid. Thereafter, the obtained sol liquid is heated in an autoclave made of titanium at 230°C for 11 hours to grow titanium oxide particles. Then, the titanium oxide particles are dispersed with ultrasound for 30 minutes to prepare a colloid solution containing the titanium oxide particles having an average particle size (an average primary particle size) of 15 nm. Then, ethanol twice as much in volume as the obtained colloid solution is added thereto and the resultant substance is subjected to centrifugal separation at the number of revolutions of 5000 rpm. Thus, titanium oxide particles are obtained.

Then, the obtained titanium oxide particles are washed and thereafter a substance obtained by dissolving ethyl cellulose and terpineol in dehydrated ethanol is added thereto, followed by stirring, to thereby disperse the titanium oxide particles. Thereafter, a mixture solution is heated under a vacuum condition to evaporate ethanol, to thereby obtain a titanium oxide paste. Concentration is adjusted, for example, such that final composition of titanium oxide solid concentration of 20 wt %, ethyl cellulose of 10 wt %, and terpineol of 64 wt % is achieved.

Examples of a solvent used for preparing a paste containing semiconductor particles (in which semiconductor particles are suspended) include, other than the above, a glyme-based solvent such as ethylene glycol monomethyl ether, an alcohol-based solvent such as isopropyl alcohol, a mixture solvent such as isopropyl alcohol/toluene, water, and the like.

Then, with the method above, the paste containing semiconductor particles is applied onto the conductive layer and fired to thereby obtain a photoelectric conversion layer. For drying and firing, depending on a type of a support or semiconductor particles to be used, such a condition as a temperature, a time period, and an atmosphere should be adjusted as appropriate. Firing can be carried out, for example, in an atmosphere or in an inert gas atmosphere in a range approximately from 50 to 800°C for approximately 10 seconds to 12 hours. Drying and firing can be carried out once at a single temperature or two or more times with a temperature being varied.

A method of forming film-shaped porous insulating layer 5 on a layer composed of a porous semiconductor is not particularly limited, and a known method is exemplified. Specifically, methods of forming a film on a conductive layer include a method of applying a paste containing semiconductor particles onto a conductive layer with a screen printing method, an ink jet method, and the like and thereafter firing the conductive layer, a sol-gel method, a method making use of electrochemical oxidation-reduction reaction, and the like. Among these methods, a screen printing method using a paste is particularly preferred because a thick porous insulating layer can be formed with low cost.

As a method of forming counter electrode conductive layer 6 on porous insulating layer 5, a vapor deposition method, a printing method, and the like are exemplified. In forming a counter electrode conductive layer with a vapor deposition method, the film itself becomes porous, and hence it is not necessary to newly form pores through which a dye solution or a carrier transport material can transfer.

In forming pores in counter electrode conductive layer 6, for example, a method of partial evaporation with irradiation with laser beams can be employed.

As a method of adsorbing a dye to a layer composed of a porous semiconductor, for example, a method of immersing the layer composed of the porous semiconductor formed on conductive layer 2 in a solution in which the dye has been dissolved (a dye adsorption solution) is exemplified. Any solvent capable of dissolving a dye is applicable as a solvent for dissolving a dye, and specifically, alcohols such as ethanol, ketones such as acetone, ethers such as diethyl ether and tetrahydrofuran, nitrogen compounds such as acetonitrile, halogenated aliphatic hydrocarbon such as chloroform, aliphatic hydrocarbon such as hexane, aromatic hydrocarbon such as benzene, esters such as ethyl acetate, water, and the like are exemplified. These solvents may be employed as a mixture of two or more types.

Dye concentration in a solution can be adjusted as appropriate depending on a type of a dye and a solvent to be used. For improvement in adsorption function, however, concentration is preferably as high as possible and concentration may be, for example, not lower than $5 \times 10^{-4}$ mol/liter.

Sealing material 8 is fabricated by cutting a heat seal film, an ultraviolet curable resin, or the like in a shape surrounding the stack.

In a case of using a silicone resin, an epoxy resin, or glass frit, a pattern of sealing material 8 can be formed with a dispenser. In a case of using a hot melt resin, the pattern of sealing material 8 can be formed by making a patterned hole in a sheet-like hot melt resin.

Sealing material 8 is arranged between transparent electrode substrate 11 and cover layer 7 so as to bond them with each other, and fixed through heating or irradiation with ultraviolet rays.

A carrier transport material is introduced through an electrolyte (carrier transport material) introduction hole provided in advance in the cover layer and the carrier transport layer is filled therewith. The electrolyte introduction hole is sealed with an ultraviolet curable resin after introduction of the carrier transport material.

Through the steps above, wet-type solar battery 10 as shown in Fig. 1 (a) is manufactured.

<Wet-Type Solar Battery Module>

Fig. 2 is a schematic cross-sectional view showing a layered structure of a wet-type solar battery module according to the present invention.

A wet-type solar battery module 20 according to the present invention is formed by connecting in series at least two solar batteries including a wet-type solar battery having transparent electrode substrate 11 constituted of support 1 and conductive layer 2 formed on one surface of support 1, a stack in which conductive layer 2 formed on one surface of transparent electrode substrate 11, photoelectric conversion layer 4 with a dye being adsorbed to a layer composed of a porous semiconductor, porous insulating layer 5, counter electrode conductive layer 6, and an optionally provided catalyst layer (not shown) are stacked in the order above, sealing material 8 formed around the outer periphery of the stack, cover layer 7 arranged at a prescribed distance from the catalyst layer to face the same and supported by sealing material 8, and a carrier transport layer sandwiched between conductive layer 2 on the inner side of sealing material 8 and cover layer 7 and supported by sealing material 8. Namely, at least one of at least two solar batteries forming the wet-type solar battery module should only be the wet-type solar battery according to the present invention.

Adjacent wet-type solar batteries are preferably such that a catalyst layer or a counter electrode conductive layer in one wet-type solar battery and a conductive layer in the other solar battery are electrically connected to each other. A collector electrode portion 13 may be fabricated on conductive layer 2 outside an outermost sealing material 12 of wet-type solar battery module 20.

Examples

Though the present invention will be described further specifically with reference to Examples and Comparative Examples, the present invention is not limited by these Examples and Comparative Examples.

<Fabrication of Solar Battery Substrate>

Transparent electrode substrate 11 (manufactured by Nippon Sheet Glass Co., Ltd., glass with an $SnO_2$ film) of 30 mm × 30 mm × 1.0 mm thick was prepared. Transparent electrode substrate 11 was such that a conductive layer formed from an $SnO_2$ film had been formed on the support composed of glass, The conductive layer in transparent electrode substrate 11 was cut with laser scribing to form scribe line 3. Then, a screen plate having a pattern of photoelectric conversion layer 4 and a screen printer (manufactured by Newlong Seimitsu Kogyo Co., Ltd., model number: LS-150) were used to apply a commercially available titanium oxide paste (manufactured by Solaronix, trade name: D/SP) and leveling for 1 hour at room temperature was carried out. Thereafter, the obtained coating film was dried for 20 minutes in an oven set at 80°C and further fired for 60 minutes in air by using a firing furnace (manufactured by Denken Co., Ltd., model number: KDF P-100) set at 500°C. This application and firing step was repeated three times, to thereby obtain photoelectric conversion layer 4 having a film thickness of 15 μm.

Distance D from the photoelectric conversion layer to the scribe line was measured and sets of 10 wet-type solar batteries with D = 20, 30, 40, 50, 100, 150, 400, 500, 550, 600, 750, 1000 μm, respectively, were fabricated.

Then, a paste containing zirconia particles (average particle size of 50 nm) was applied onto the photoelectric conversion layer with the use of a screen printer. Thereafter, firing at 500°C was carried out for 60 minutes, so that porous insulating layers 5 of various film thicknesses were formed.

Then, a mask having a prescribed pattern formed and a vapor deposition apparatus (manufactured by Anelva Corporation, model number: EVD500A) were used to form titanium to a film thickness of 400 nm on porous insulating layer 5 at a vapor deposition rate of 8 Å/s. Thus, the conductive layer was formed.

A mask further having a prescribed pattern formed and the vapor deposition apparatus (manufactured by Anelva Corporation, model number: EVD500A) were used to form Pt on counter electrode conductive layer 6 at a vapor deposition rate of 4 Å/s, to thereby obtain a catalyst layer. It is noted that a size and a position of the catalyst layer were the same as those of the porous semiconductor layer.

Each wet-type solar battery was checked for internal short-circuiting with a tester and a smallest film thickness of the porous insulating layer free from short-circuiting was measured for each value of D. Fig. 3 shows the results.

It is noted that the porous semiconductor layer peeled off in the film having D = 20, 30, 40 μm.

It can be seen in Fig. 3 that, with distance D being up to 500 μm, insulating film thickness Y increases substantially linearly, whereas with distance D being not smaller than 500 μm, the insulating film thickness is substantially constant without variation.

When relation between insulating film thickness Y (μm) up to 500 μm and distance D (μm) is linearly approximated in Fig. 3, the following relational expression (1) is derived.

$$Y \geq 0.02D + 6.5 \ (D \leq 500) \qquad \text{... (1)}$$

In addition, in Fig. 1, when distance D exceeds 500 μm, a smallest film thickness of the porous insulating layer film free from short-circuiting is 16.5 μm.

<Examples 1 to 9, Comparative Example 1 to 3>

As a result of fabrication of the solar battery substrates above, substrates having D = 50, 100, 150, 400, 500, 550, 600, 750, 1000 μm, respectively, were used to fabricate wet-type solar batteries.

A procedure of a method of fabricating a wet-type solar battery in Examples 1 to 9 is shown below. It is noted that the porous semiconductor layer peeled off in the solar battery substrates having D = 20 μm (Comparative Example 1), 30 μm (Comparative Example 2), and 40 μm (Comparative Example 3), respectively, and hence a wet-type solar battery could not be fabricated.

The stack was immersed in a dye adsorption solution prepared in advance at room temperature for 100 hours. Thereafter, the stack was washed with ethanol and dried at approximately 60°C for approximately 5 minutes, so that the dye was adsorbed on the photoelectric conversion layer.

The adsorption dye solution was prepared by dissolving a dye shown in the chemical formula (4) above (manufactured by Solaronix, trade name: Ruthenium 620 1H3TBA) in a mixture solvent of acetonitrile and t-butanol at a volume ratio of 1:1 such that concentration attained to $4 \times 10^{-4}$ mol/liter.

Then, the substrate having the stack formed and the glass substrate were bonded to each other with the use of a heat seal film (manufactured by Du Pont Kabushiki Kaisha, Himilan 1855) cut in a shape surrounding the stack. Then, the substrates were heated for 10 minutes in an oven set to approximately 100°C for compression bonding. It is noted that the molten heat seal film becomes the sealing material.

Then, an electrolytic solution prepared in advance was introduced through an electrolytic solution introduction hole provided in advance in the glass substrate and the electrolytic solution introduction hole was sealed with an ultraviolet curable resin (manufactured by ThreeBond Co., Ltd., model number: 31X-101) so that the carrier transport layer was filled with the carrier transport material. A wet-type solar battery (single cell) was completed as above.

The electrolytic solution was obtained by employing acetonitrile as the solvent, adding LiI (manufactured by Aldrich) and $I_2$ (manufactured by Kishida Chemical Co., Ltd.) as redox species such that their concentrations were set to 0.1 mol/liter and 0.01 mol/liter, respectively. Furthermore, t-butyl pyridine (manufactured by Aldrich) and dimethyl propyl imidazole iodide (manufactured by Shikoku Chemicals Corporation) both as additives were employed for preparation such that their concentrations were set to 0.5 mol/liter and 0.6 mol/liter, respectively.

An Ag paste (manufactured by Fujikura Kasei Co., Ltd., trade name: Dotite) was applied as a collector electrode portion to the obtained wet-type solar battery. The wet-type solar batteries according to Examples 1 to 9 were fabricated as above.

<Examples 10 to 19>

A wet-type solar battery was fabricated with a method the same as in Example 1, except that distance A from the outer periphery of the porous semiconductor layer (photoelectric conversion layer) on the side not facing the scribe line to the outer periphery of the counter electrode conductive layer was changed.

Namely, distance A from the outer periphery of the porous semiconductor layer (photoelectric conversion layer) on the side not facing the scribe line to the outer periphery of the counter electrode conductive layer was measured, and in the case where the outer periphery of the counter electrode conductive layer was located outside the outer periphery of the photoelectric conversion layer, sets of 10 wet-type solar batteries having distances A from the outer periphery = 0, 100, 200, 400, 500, 550, 600, 750, 1000 μm, respectively, were fabricated. In addition, in the case where the outer periphery of the photoelectric conversion layer was located outside the outer periphery of the counter electrode conductive layer, sets of 10 wet-type solar batteries having distances A from the outer periphery = 100, 200, 300, 400, 500, 550, 600, 750, 1000 μm, respectively, were fabricated. Each wet-type solar battery was checked for internal short-circuiting with a tester and a smallest film thickness of the porous insulating layer free from short-circuiting was measured for each value of distance A. Fig. 4 shows the results.

It can be seen in Fig. 4 that, with distance A being up to 500 μm, insulating film thickness Y increases substantially linearly, whereas with distance A being not smaller than 500 μm, the insulating film thickness is substantially constant without variation.

When relation between insulating film thickness Y (μm) up to 500 μm and distance A (μm) is linearly approximated in Fig. 4 in the case where the outer periphery of the photoelectric conversion layer is located inside the outer

periphery of the counter electrode conductive layer, the following relational expression (3) is derived.

$$Y \geq 0.02A + 6.5\ (0 \leq A \leq 500) \qquad \ldots (3)$$

In addition, in Fig. 4, when distance A exceeds 500 $\mu$m, a smallest film thickness of the porous insulating layer film free from short-circuiting is 16.5 $\mu$m.

When the outer periphery of the photoelectric conversion layer is located outside the outer periphery of the counter electrode conductive layer in the solar battery substrate fabricated above, a film thickness of a porous insulating layer where distance A = 100, 200, 300, 400, and 500 $\mu$m was set to 8 $\mu$m. On the other hand, when the outer periphery of the counter electrode conductive layer is located outside the outer periphery of the photoelectric conversion layer, a film thickness of a porous insulating layer where distance A = 0, 100, 200, 400, and 500 $\mu$m was set to 15 $\mu$m. It is noted that relation between Examples 10 to 19 and distance A is shown in Table 2 shown later.

<Comparative Examples 4 to 10>

In the case where the outer periphery of the photoelectric conversion layer is located outside the outer periphery of the counter electrode conductive layer in fabricating the solar battery substrate above, wet-type solar batteries having distances A = 600, 750, 1000 $\mu$m were fabricated as Comparative Examples 4 to 6, respectively. A film thickness of the porous insulating layer here was set to 8 $\mu$m. On the other hand, when the outer periphery of the counter electrode conductive layer is located outside the outer periphery of the photoelectric conversion layer, wet-type solar batteries having distances A = 550, 600, 750, 1000 $\mu$m were fabricated as Comparative Examples 7 to 10, respectively. A film thickness of the porous insulating layer here was set to 15 $\mu$m. The wet-type solar batteries were otherwise fabricated with the method the same as in Examples 10 to 19.

(Evaluation Method and Results)

A black mask having an area of an opening of 1.0 $cm^2$ was placed at the light receiving surface of the wet-type solar battery in each of Examples 1 to 19 and Comparative Examples 4 to 10, this wet-type solar battery was irradiated with light at intensity of 1 $kW/m^2$ (AM 1.5 solar simulator), and photoelectric conversion efficiency ($\eta$) was measured. Tables 1 and 2 show the results. Since a solar battery could not be manufactured in Comparative Examples 1 to 3, evaluation was not conducted.

It can be seen from Table 1 that, when D exceeds 500 $\mu$m, a porous insulating layer should have a film thickness not smaller than 20 $\mu$m, lowering in FF occurs, and performance tends to lower.

It can be seen from Table 1 that, when distance A exceeds 500 $\mu$m, a porous insulating layer should have a film thickness not smaller than 16.5 $\mu$m, lowering in FF occurs, and performance tends to lower.

(Fabrication of Wet-Type Solar Battery Module)

<Examples 20 to 32>

The wet-type solar battery module shown in Fig. 2 was fabricated.

Initially, transparent electrode substrate 11 having conductive layer 2 formed on the surface of support 1 (manufactured by Nippon Sheet Glass Co., Ltd., trade name: glass with an $SnO_2$ film: 60 mm long $\times$ 37 mm wide) was prepared, and conductive layer 2 was cut by forming scribe line 3 in parallel to a longitudinal direction by laser-scribing the $SnO_2$ film on the surface of transparent electrode substrate 11.

Then, a photoelectric conversion layer was formed in accordance with Example 1. Formed photoelectric conversion layer 4 having a film thickness of 25 $\mu$m and a size of 5 mm wide and 50 mm long was formed around a position distant by 6.9 mm from the left end of the glass substrate, and three layers of the same size were formed at regular intervals from the center of this porous semiconductor film.

D in Examples 20 to 28 was set to D = 50, 100, 150, 400, 500, 550, 600, 750, 1000 $\mu$m, as in Examples 1 to 9.

Porous insulating layer 5 was formed on the layer composed of a porous semiconductor in accordance with Example 1. A film thickness of the formed porous insulating layer was in conformity with Equation (1) or Equation (2).

Then, in Examples 20 to 28, counter electrode conductive layer 6 was formed in accordance with Example 1. The formed counter electrode conductive layer having a size of 5.6 mm wide and 50 mm long was formed around a position distant by 7.2 mm from the left end of transparent electrode substrate 11, and three layers of the same size were formed at intervals of 7 mm from the center of porous insulating layer 5 at the left end.

In addition, in Examples 29 to 32, counter electrode conductive layer 6 was formed in accordance with Examples 16 to 19. Distance A in this case was set to A = 100, 200, 400, 500 μm, respectively, as in Examples 16 to 19. A film thickness of the formed porous insulating layer was in conformity with Equation (3).

Then, Pt was formed on counter electrode conductive layer 6 in accordance with Example 1 to thereby stack the catalyst layer. It is noted that a size and a position of the catalyst layer were the same as those of layer 4 composed of the porous semiconductor.

The obtained stack was immersed in a dye solution employed in Example 1 at room temperature for 120 hours so that the dye adsorbed to the layer composed of the porous semiconductor and photoelectric conversion layer 4 was thus formed.

Then, an ultraviolet curable resin (manufactured by ThreeBond Co., Ltd., 31X-101) was applied in between the stacks and around the cell with the use of a dispenser (manufactured by EFD, ULTRASAVER), and a glass substrate of 60 mm long × 30 mm wide was bonded as a cover layer. Thereafter, the glass substrate was irradiated with ultraviolet rays from an ultraviolet lamp (manufactured by EFD, NOVACURE) to thereby cure a photosensitive resin, and thus sealing material 8 and outermost sealing material 12 were formed.

Thereafter, an electrolytic solution the same as in Example 1 was introduced through the electrolytic solution introduction hole provided in advance in the glass substrate employed as cover layer 7, the ultraviolet curable resin was further applied, and the resin was irradiated with ultraviolet rays similarly to the sealing material. The resin was thus cured and sealing was achieved, and a carrier transport layer was formed and the wet-type solar battery module was completed.

An Ag paste (manufactured by Fujikura Kasei Co., Ltd., trade name: Dotite) was applied as the collector electrode portion to the obtained module.

(Evaluation Method and Results)

A black mask having an area of an opening of 13 $cm^2$ was placed at a light receiving surface of the wet-type solar battery module in each of Examples 20 to 32. Then, this wet-type solar battery was irradiated with light at intensity of 1 $kW/m^2$ (AM 1.5 solar simulator), and photoelectric conversion efficiency was measured. Tables 1 and 2 show the results.

[Table 1]

| | D (μm) | η |
|---|---|---|
| Example 1 | 50 | 8.5 |
| Example 2 | 100 | 8.6 |
| Example 3 | 150 | 8.4 |
| Example 4 | 400 | 8.2 |
| Example 5 | 500 | 8.0 |
| Example 6 | 550 | 7.4 |
| Example 7 | 600 | 7.3 |
| Example 8 | 750 | 7.0 |
| Example 9 | 1000 | 6.9 |
| Example 20 | 50 | 7.9 |
| Example 21 | 100 | 8.0 |
| Example 22 | 150 | 8.1 |
| Example 23 | 400 | 7.9 |
| Example 24 | 500 | 7.7 |
| Example 25 | 550 | 7.5 |
| Example 26 | 600 | 7.1 |
| Example 27 | 750 | 6.8 |
| Example 28 | 1000 | 6.4 |

[Table 2]

| | A (μm) | η |
|---|---|---|
| Example 10 | 500 *1 | 7.0 |
| Example 11 | 400 *1 | 7.2 |
| Example 12 | 300 *1 | 7.5 |
| Example 13 | 200 *1 | 7.8 |
| Example 14 | 100 *1 | 8.0 |
| Example 15 | 0 | 8.0 |
| Example 16 | 100 | 8.0 |
| Example 17 | 200 | 8.2 |
| Example 18 | 400 | 7.9 |
| Example 19 | 500 | 7.2 |
| Example 29 | 100 | 7.5 |
| Example 30 | 200 | 7.4 |
| Example 31 | 400 | 7.2 |
| Example 32 | 500 | 7.0 |
| Comparative Example 4 | 1000 *1 | 5.9 |
| Comparative Example 5 | 750 *1 | 6.1 |
| Comparative Example 6 | 600 *1 | 6.3 |
| Comparative Example 7 | 550 | 6.4 |
| Comparative Example 8 | 600 | 6.3 |
| Comparative Example 9 | 750 | 6.1 |
| Comparative Example 10 | 1000 | 5.8 |

*1 Distance A in the case where the outer periphery of the photoelectric conversion layer is located outside the outer periphery of the counter electrode conductive layer

REFERENCE SIGNS LIST

1 support; 2 conductive layer; 3 scribe line; 4 photoelectric conversion layer; 5 porous insulating layer; 6 counter electrode conductive layer; 7 cover layer; 8, 12 sealing material; 10 wet-type solar battery; 11 transparent electrode substrate; 13 collector electrode portion; and 20 wet-type solar battery module.

## Claims

**1.** A wet-type solar battery (10), comprising:

a support (1) composed of a light transmissive material; and
a stack in which a conductive layer (2), a photoelectric conversion layer (4) composed of a porous semiconductor, a porous insulating layer (5), and a counter electrode conductive layer (6) are stacked in this order on said support (1),
said conductive layer (2) having a first region on which said photoelectric conversion layer (4) is stacked and a second region on which said photoelectric conversion layer (4) is not stacked, with a scribe line (3) lying therebetween, and
said photoelectric conversion layer (4) being stacked on a part of a surface of said first region and a distance D from a peripheral portion of said first region facing said scribe line (3) to a peripheral portion of said photoelectric

conversion layer (4) being not smaller than 50 μm and being not greater than 500 μm,
a distance A from an outer periphery of said counter electrode conductive layer (6) projected on a light receiving surface on a side not facing said scribe line (3) to an outer periphery of said photoelectric conversion layer (4) being not greater than 500 μm, wherein a film thickness Y of said porous insulating layer (5) satisfies

$$Y \geq 0.02D + 6.5,$$

where Y represents said film thickness (μm) of said porous insulating layer (5) and D represents said distance D (μm), and
when the outer periphery of said photoelectric conversion layer (4) is located inside the outer periphery of said counter electrode conductive layer (6), said distance A and said film thickness Y of said porous insulating layer (5) satisfy

$$Y \geq 0.02A + 6.5,$$

where Y represents said film thickness (μm) of said porous insulating layer (5) and A represents said distance A (μm).

**2.** A wet-type solar battery module (20) in which two or more wet-type solar batteries (10) are connected in series, comprising:

at least one said wet-type solar battery (10) according to claim 1, and
connection in series being such that a counter electrode conductive layer (6) of one wet-type solar battery (10) of adjacent wet-type solar batteries (10) is electrically connected to a conductive layer (2) of the other wet-type solar battery (10).

## Patentansprüche

**1.** Nasse Solarbatterie (10), aufweisend:

einen Träger (1), der aus einem lichtdurchlässigen Material besteht; und
einen Stapel, in welchem eine leitfähige Schicht (2), eine photoelektrische Umwandlungsschicht (4), die aus einem porösen Halbleiter besteht, eine poröse isolierende Schicht (5) und eine leitfähige Schicht (6) einer Gegenelektrode in dieser Reihenfolge auf dem Träger (1) gestapelt sind,
wobei die leitfähige Schicht (2) ein erstes Gebiet, auf dem die photoelektrische Umwandlungsschicht (4) gestapelt ist, und ein zweites Gebiet aufweist, auf dem die photoelektrische Umwandlungsschicht (4) nicht gestapelt ist, mit einer dazwischenliegenden Ritzlinie (3), und
wobei die photoelektrische Umwandlungsschicht (4) auf einem Teil einer Oberfläche des ersten Gebiets gestapelt ist und ein Abstand D von einem peripheren Bereich des ersten Gebiets, der der Ritzlinie (3) gegenüberliegt, zu einem peripheren Bereich der photoelektrischen Umwandlungsschicht (4) nicht kleiner als 50 μm und nicht größer als 500 μm ist,
wobei ein Abstand A von einer äußeren Peripherie der leitfähigen Schicht (6) einer Gegenelektrode, die auf eine lichtempfangende Oberfläche projiziert wird, auf einer der Ritzlinie (3) nicht gegenüberliegenden Seite zu einer äußeren Peripherie der photoelektrischen Umwandlungsschicht (4) nicht größer als 500 μm ist, wobei die Filmdicke Y der porösen isolierenden Schicht (5)

$$Y \geq 0{,}02D + 6{,}5$$

erfüllt, wobei Y die Filmdicke (μm) der porösen isolierenden Schicht (5) repräsentiert und D den Abstand D (μm) repräsentiert, und
wenn die äußere Peripherie der photoelektrischen Umwandlungsschicht (4) innerhalb der äußeren Peripherie der leitfähigen Schicht (6) einer Gegenelektrode gelegen ist, der Abstand A und die Filmdicke Y der porösen isolierenden Schicht (5)

$$Y \geq 0{,}02A + 6{,}5$$

erfüllen, wobei Y die Filmdicke ($\mu$m) der porösen isolierenden Schicht (5) repräsentiert und A den Abstand A ($\mu$m) repräsentiert.

**2.** Nasses Batteriemodul (20), in welchem zwei oder mehr nasse Solarbatterien (10) in Reihe geschaltet sind, aufweisend:

zumindest eine besagte nasse Solarbatterie (10) nach Anspruch 1, und
eine Reihenschaltung derart, dass eine leitfähige Schicht (6) einer Gegenelektrode einer nassen Solarbatterie (10) benachbarter nasser Solarbatterien (10) mit einer leitfähigen Schicht (2) der anderen nassen Solarbatterie (10) elektrisch verbunden ist.

## Revendications

**1.** Batterie solaire de type humide (10) comprenant :

un support (1) composé d'un matériau transmetteur de lumière ; et
un empilement dans lequel une couche conductrice (2), une couche de conversion photoélectrique (4) composée d'un semi-conducteur poreux, une couche isolante poreuse (5) et une couche conductrice à contre-électrode (6) sont empilées dans cet ordre sur ledit support (1),
ladite couche conductrice (2) ayant une première zone sur laquelle ladite couche de conversion photoélectrique (4) est empilée et une deuxième zone sur laquelle ladite couche de conversion photoélectrique (4) n'est pas empilée, avec une ligne de découpe (3) entre les deux, et
ladite couche de conversion photoélectrique (4) étant empilée sur une partie d'une surface de ladite première zone, et une distance D entre une partie périphérique de ladite première zone dirigée vers ladite ligne de découpe (3) et une partie périphérique de ladite couche de conversion photoélectrique (4) étant non inférieure à 50 $\mu$m et étant non supérieure à 500 $\mu$m,
une distance A entre une périphérie extérieure de ladite couche conductrice à contre-électrode (6) projetée sur une surface de réception de lumière sur un côté non dirigé vers ladite ligne de découpe (3) et une périphérie extérieure de ladite couche de conversion photoélectrique (4) étant non supérieure à 500 $\mu$m, dans laquelle une épaisseur de film Y de ladite couche isolante poreuse (5) satisfait à

$$Y \geq 0{,}02D + 6{,}5,$$

où Y représente ladite épaisseur de film ($\mu$m) de ladite couche isolante poreuse (5) et D représente ladite distance D ($\mu$m), et
quand la périphérie extérieure de ladite couche de conversion photoélectrique (4) est située à l'intérieur de la périphérie extérieure de ladite couche conductrice à contre-électrode (6), ladite distance A et ladite épaisseur de film Y de ladite couche isolante poreuse (5) satisfont à

$$Y \geq 0{,}02A + 6{,}5,$$

où Y représente ladite épaisseur de film ($\mu$m) de ladite couche isolante poreuse (5) et A représente ladite distance A ($\mu$m).

**2.** Module de batteries solaires de type humide (20) dans lequel deux batteries solaires de type humide (10) ou plus sont montées en série, comprenant :

au moins une batterie solaire de type humide (10) selon la revendication 1, et
le montage en série étant tel qu'une couche conductrice à contre-électrode (6) d'une batterie solaire de type humide (10) de batteries solaires de type humide (10) adjacentes est montée électriquement sur une couche conductrice (2) de l'autre batterie solaire de type humide (10).

FIG.1

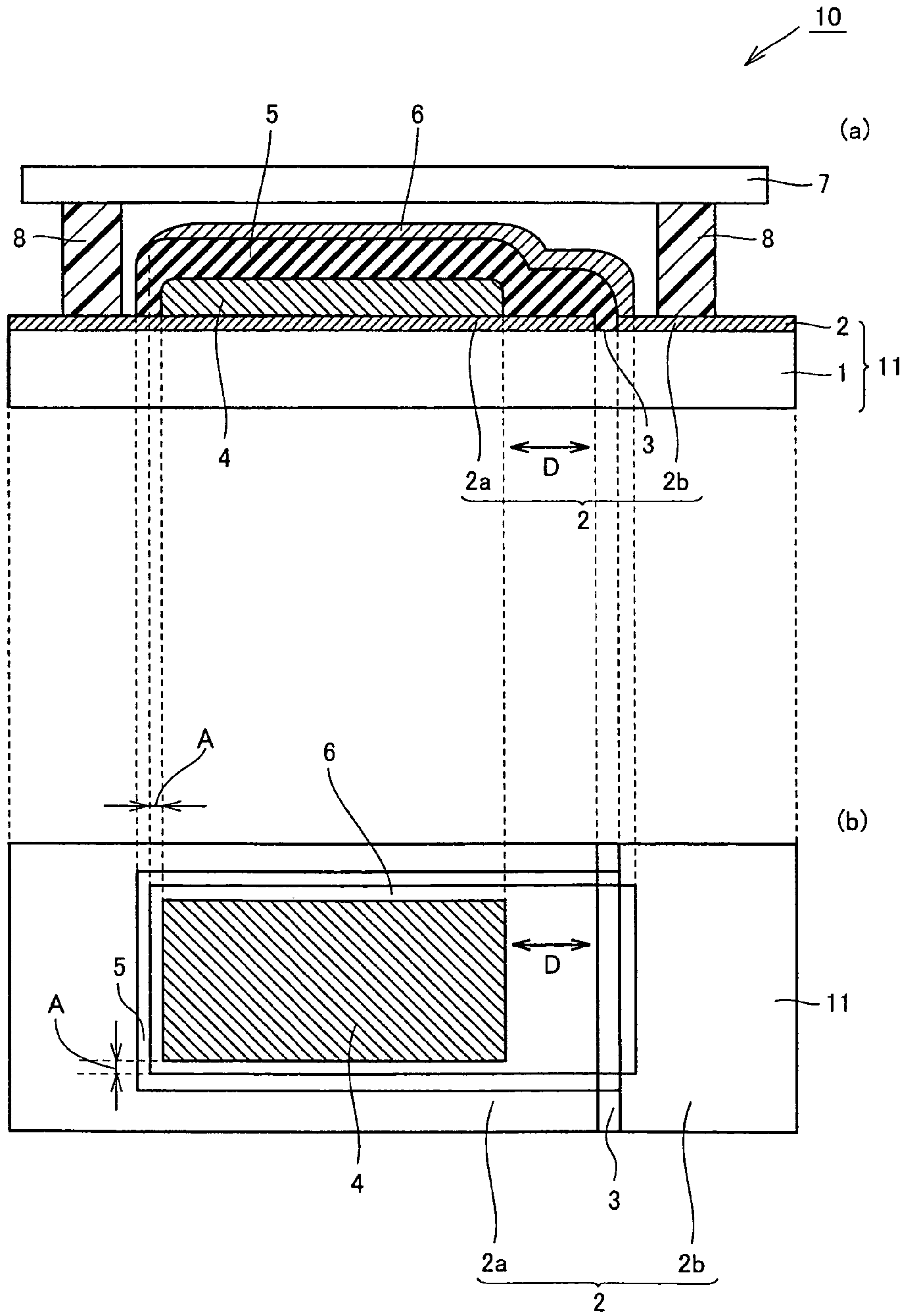

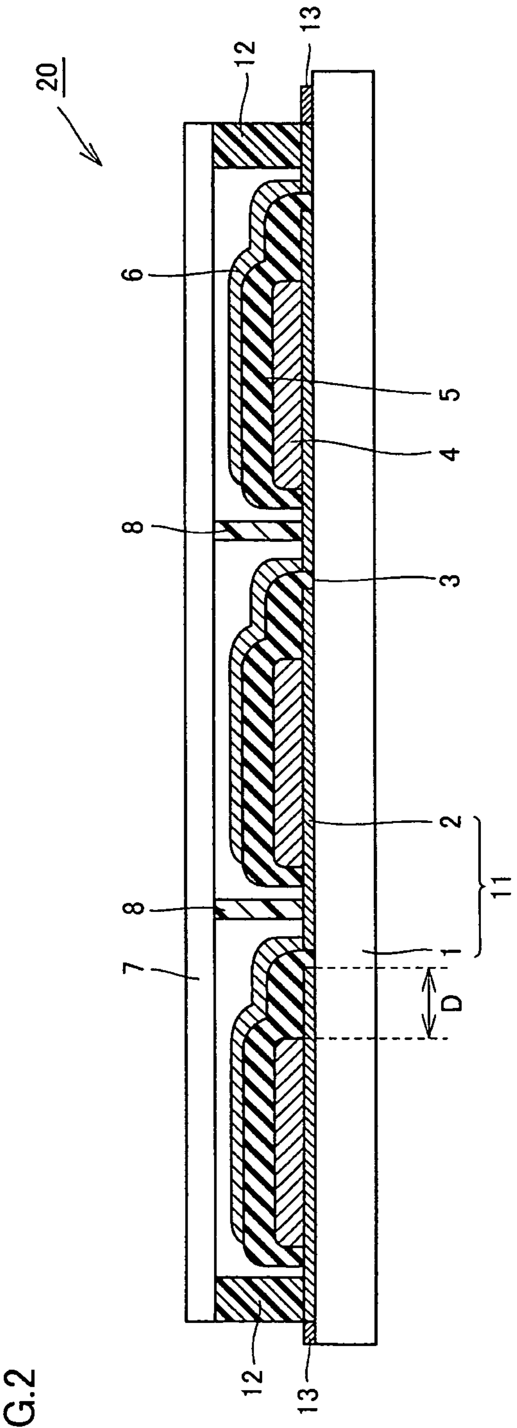


FIG.2

FIG.3

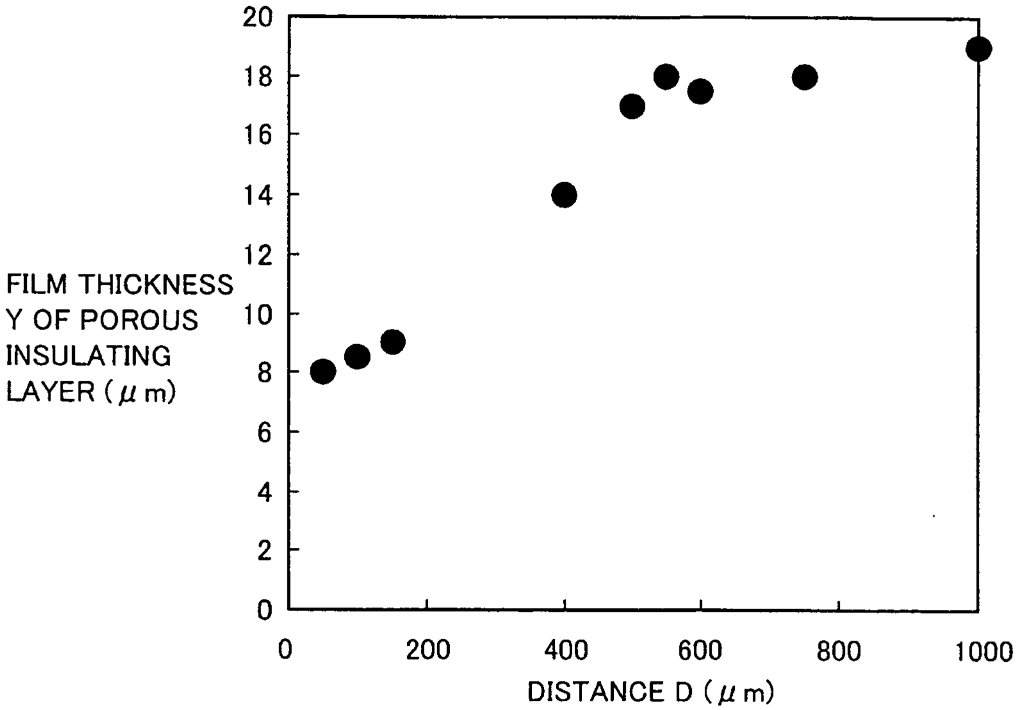
20
18
16
14
12
10
8
6
4
2
0
FILM THICKNESS
Y OF POROUS
INSULATING
LAYER (μm)
0
200
400
600
800
1000
DISTANCE D (μm)

FIG.4

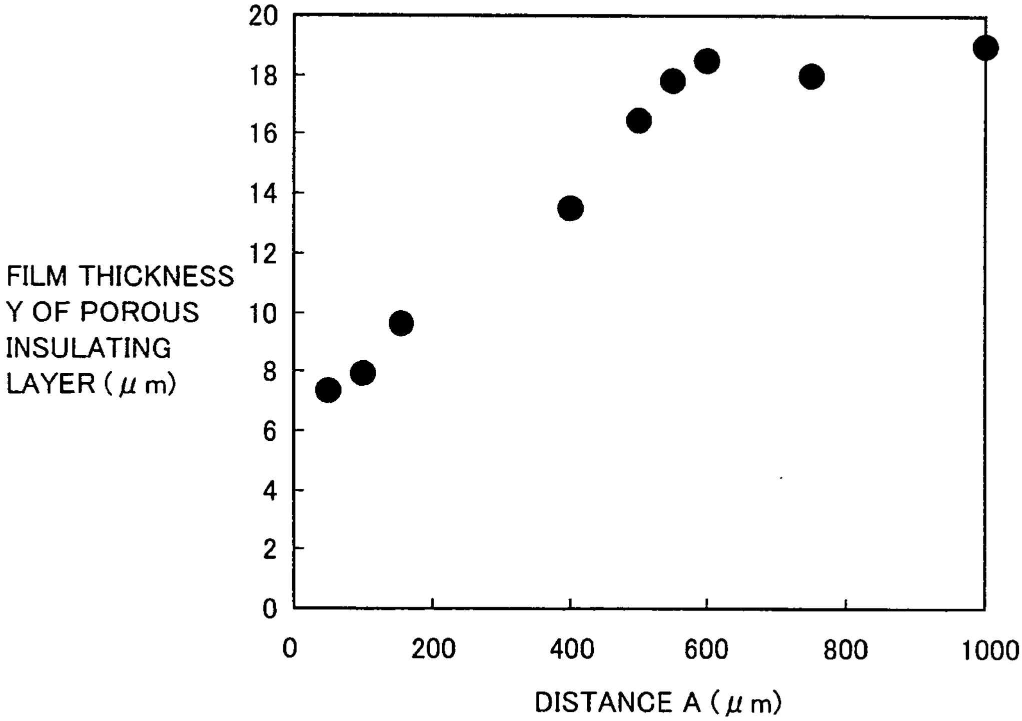
FILM THICKNESS Y OF POROUS INSULATING LAYER (μm)
20
18
16
14
12
10
8
6
4
2
0
0
200
400
600
800
1000
DISTANCE A (μm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 1220380 A
- WO 9716838 A
- JP 2002367686 A
- JP 2009043481 A
- JP 2008016351 A
- JP 2007194039 A